# EUROPEAN PATENT APPLICATION

(11) **EP 1 916 173 A2**
(43) Date of publication of application: **30.04.2008**
(21) Application number: 07020935.8
(22) Date of filing: 25.10.2007
(51) Int. Cl.: B62B 7/08

(54) **Safety lock for an umbrella stroller**

(30) Priority: 29.10.2006 CN 200620066921 U
(71) Applicant: Lerado (Zhong Shan) Industrial Co., Ltd., Guangdong (CN)
(72) Inventor: Yang, Cheng-Fan, Xue-Jia Tainan Hsien (TW)
(74) Representative: TER MEER - STEINMEISTER & PARTNER GbR

(57) **Abstract**

A safety lock mounted on an umbrella stroller comprises at least a release actuator movably mounted on a pair of push bars of an umbrella baby stroller, an articulated joint mounted with the umbrella baby stroller, a latch member for locking the articulated joint, an associating member for connecting between the release actuator and the latch member, and a resilient member for keeping the latch member biased in a locked position. The umbrella baby stroller may include an upper frame, a lower frame connected to the upper frame by the articulated joint, and a spread mechanism pivotally connected between the upper frame and the lower frame. When the spread mechanism is unlocked, the safety lock shall stop any further folding in longitudinal direction, and the user can complete the full folding in longitudinal direction if only if to pull the release actuator to unlock the safe lock.

## Description

### BACKGROUND OF THE INVENTION

### FIELD OF THE INVENTION

The present invention relates to a safety lock operatively mounted on an umbrella stroller for preventing full folding in an accident which may occur abruptly in negligent using, and in particular, to a safety lock operatively mounted on a push bar of the umbrella stroller for remote control an articulated joint to stop the folding in the longitudinal direction thereof.

### DESCRIPTION OF THE RELATED ART

Traditional baby stroller typically has an erected position for transportation and carrying toddlers or babies traveling to outdoors and a folded position for easy carrying and storage while being not in use. Umbrella baby stroller is known as capable of folding in the longitudinal and lateral directions like the folding of an umbrella.

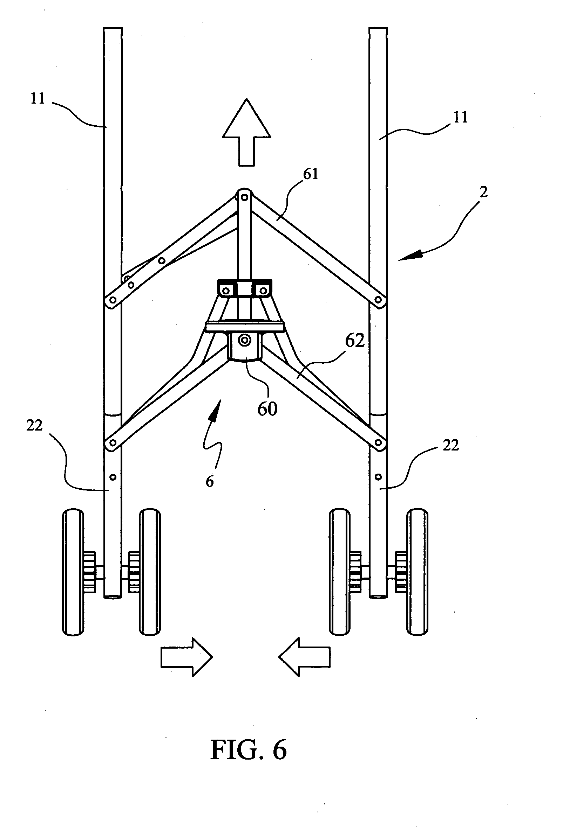

An umbrella stroller frame normally includes a spreader mechanism on the back side for controlling the lateral folding as illustrated in FIG. 6. The spreader mechanism 6 is controlled by a spreader lock 60, comprised an upper pivoting bar 61 and a lower pivoting bar 62. While the spreader lock 60 is unlocked, the umbrella stroller frame 2 may reduce its occupying volume in lateral direction.

For safety, most country now has a safety standard that requires all the umbrella strollers must have a safety lock to prevent the full folding in accidents, as a lay-user who may not know the safe way in using it, and this may endanger the baby passenger sitting therein by abruptly unlock the spreader mechanism 6.

Now, most commercial umbrella baby strollers are typically having an extra safety lock associated with the spreader mechanism 6. The extra safety lock is mounted on the upper end of the spreader mechanism 6 for more visible and easy access by a user; however, while the user actuated to unlock the safety lock by hand, the rotation of the pivoting bars 61 of the spreader mechanism 6 may catch and clip the user's finger.

### SUMMARY OF THE INVENTION

In order to prevent the user's fingers caught and clipped by the spreader mechanism while to actuate the extra safety lock on top of the spreader mechanism, the present invention provides a new and different safety lock that aimed to prevent the user's fingers moving around the scissor-like pivoting bars of the spreader mechanism, so as to improve the safety level of the folding of umbrella stroller.

The safety lock according to the present invention may comprise at least a release actuator movably mounted on a pair of push bars of an umbrella baby stroller, an articulated joint mounted with the umbrella baby stroller, a latch member for locking the articulated joint, an associating member for connecting between the release actuator and the latch member, and a resilient member for keeping the latch member biased in a locked position.

The umbrella baby stroller embodied with the safety lock of the present invention may include an upper frame, a lower frame connected to the upper frame by the articulated joint, and a spread mechanism pivotally connected between the upper frame and the lower frame.

When the spread mechanism is unlocked by either user's hand or foot, the safety lock of the present invention can then used to stop any further folding in longitudinal direction. The user can complete the full folding in longitudinal direction if only if knowing to pull the release actuator to unlock the safe lock of the present invention.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by way of illustration only, and thus are not limitative of the present invention, and wherein:

FIG. 1 is a perspective view of an embodiment of safety lock according to the present invention mounted on an umbrella stroller frame.

FIG. 2 is a schematic view showing the umbrella stroller frame of FIG. 1 being in a full folded position after the safety lock of the present invention is unlocked for further folding.

FIG. 3 is an exploded perspective view showing the embodiment of the safety lock of the present invention.

FIG. 4 is a partial cross-sectional view showing the safety lock of the present invention.

FIG. 5 is a cross-sectional schematic view showing the operation of the safety lock of the present invention.

FIG. 6 is a schematic view showing the folding of an unlocked spreader mechanism of a traditional umbrella stroller frame.

### DETAILED DESCRIPTION OF THE PREFERRED EMBODIMENTS

Reference will now be made in detail to presently preferred embodiments of the invention, examples of which are illustrated in the accompanying drawings. An effort has been made to use the same reference numbers throughout the drawings to refer to the same or like parts.

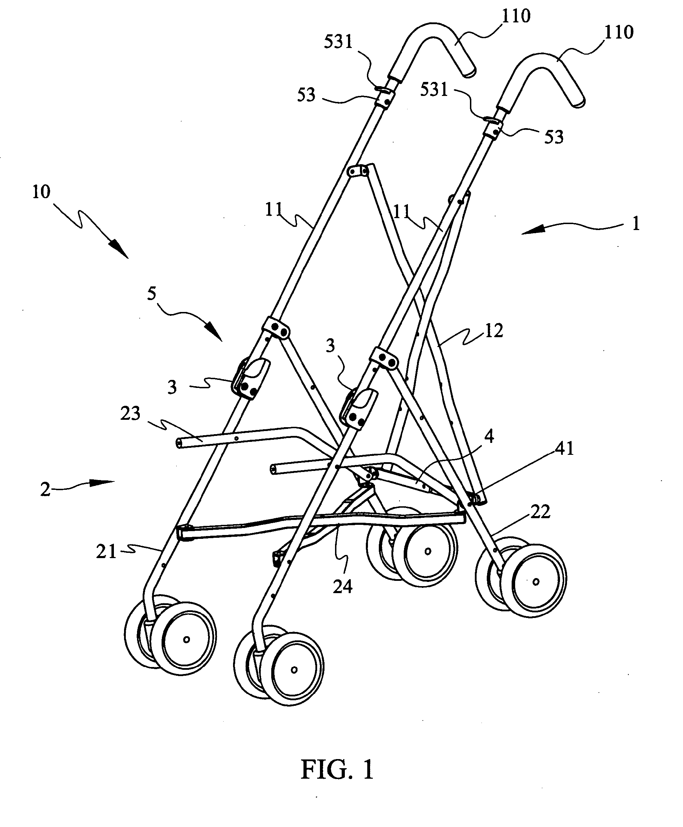

Referring to FIG. 1, an embodiment of safety lock 5 according to the present invention is embodied with an umbrella stroller frame 10. The umbrella stroller frame 10 has an upper frame 1, a lower frame 2 pivotally connected by a pair of articulated joints 3 and a spreader mechanism 12 connected between the back side of the upper frame 1 and the lower frame 2.

The upper frame 1 includes a pair of push bars 11 pivotally connected with the lower frame 2 by the articulated joints 3. It would be appreciated that the push bars 11 each has a hooked handle portion 110 connected at the upper end thereof for gripping by user's hand, and a tube portion formed with a first long slot 111 at the lower end and a second long slot 112 formed near the hooked handle portion 110.

The articulated joints 3 has a locked position and an unlocked position, and when the articulated joints 3 is unlocked, the pair of push bars 11 are allowed to pivot on the articulated joints 3 and rotatively fold forwardly.

The lower frame 2 of the umbrella stroller frame 10 includes a pair of front struts 21, a pair of rear struts 22, a seat support rod 23 and a lower scissor frame 24. The lower scissor frame 24 is pivotally connected between the lower ends of the front struts 21 and the rear struts 22. The upper ends of the rear struts 22 is pivotally connected to the push bars 11, for following the rotation of the push bars 11 to close to the front struts 21.

The spreader mechanism 12 of the present embodiment is controlled by a spreader lock 4 including a plurality of pivoting bars 41, having a locked position for holding the umbrella stroller frame 10 erected in lateral direction and an unlocked position for allowing the umbrella stroller frame 10 to be foldable in the lateral direction.

To simply the frame structure, the spreader mechanism 12 may be embodied as a scissor frame having a pair of upper ends pivotally connected with the pair of push bars 11, and a pair of lower ends pivotally connected with the pair of rear struts 22. When the spreader lock 4 has locked, the scissor frame of the spreader mechanism 1 shall be kept in extending laterally; on the contrary, while the spreader lock 4 is unlocked, the scissor frame carries the push bars 11 and the rear struts 22 to move simultaneously to close inwardly thereby to reduce the occupying volume in the lateral direction thereof.

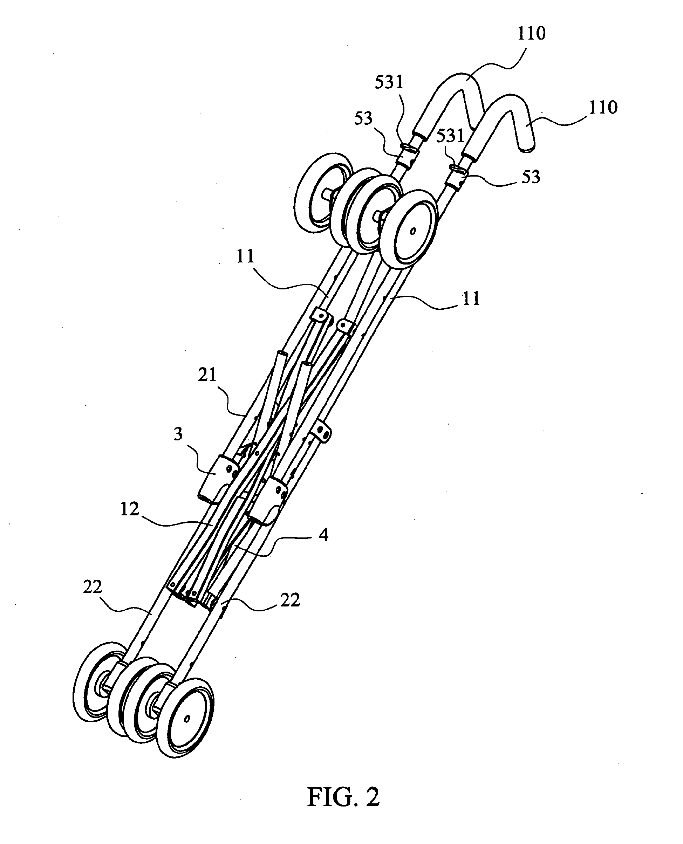

Referring to FIG. 2, when the spreader mechanism 12 and the safety lock 5 are unlocked, the umbrella stroller frame 10 can be folded into a compact configuration like an umbrella.

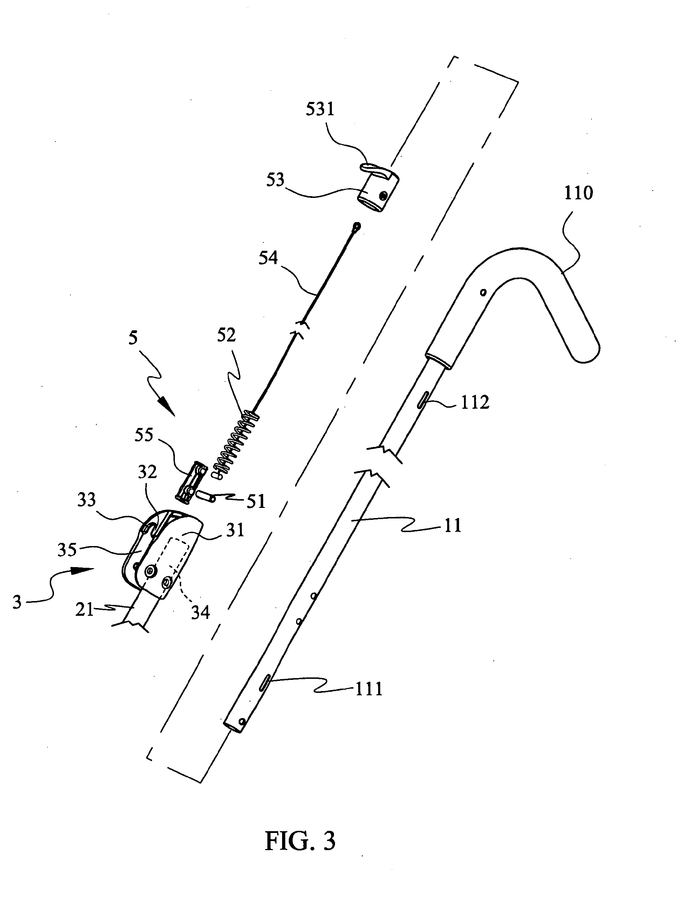

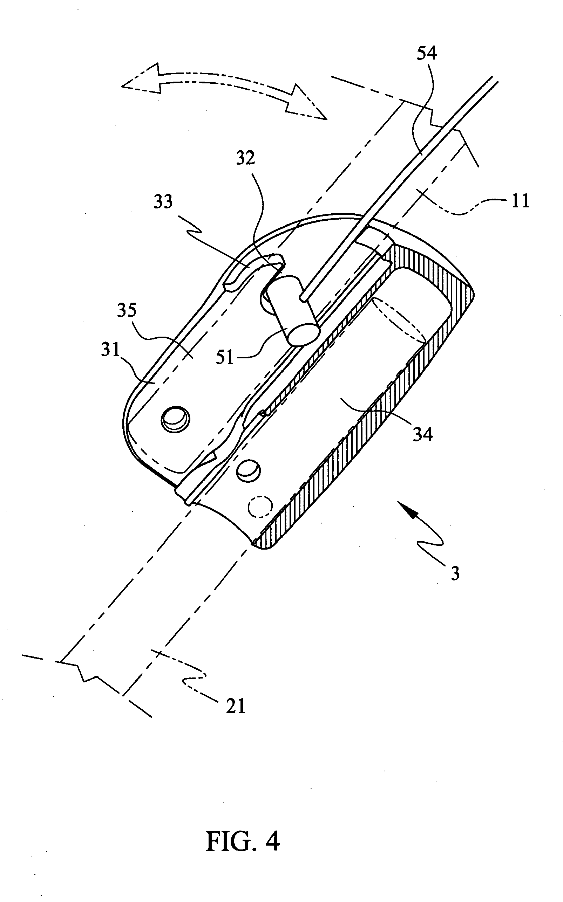

Referring to FIGS. 3 and 4, The safety lock 5 according to the present invention comprises at least a release actuator 53 movably mounted on the pair of push bars 11, the articulated joint 3 pivotally mounted on the umbrella baby stroller frame 10, a latch member 51 slidably received in the push bars 11 for locking the articulated joint 3, an associating member 54 connected between the release actuator 53 and the latch member 51, and a resilient member 52 for biasing the latch member 51 in a locked position.

For easy control, the release actuator 5 may formed with a hooked portion 531 for user to grab and pull upwardly to unlock the articulated joint 3.

The articulated joint 3 according to the present embodiment has a pair of side walls 31 formed with a first receiving space 34 and a second receiving space 35. In the second receiving space 35, each side walls 31 is formed with a pivot point for connecting with the push bars 11, a locking position 32 for stop the rotation of the push bars 11 and a guiding ramp 33 for guiding a latch member 51 trapped into the locking position 32.

As being illustrated, the locking position 32 may be embodied as a slot, an indent, a groove or the like formed inside of the second receiving space 35. The first receiving space 34 can be embodied as a hole, orifice, a slot or a socket for receiving and firmly connecting the front strut 21 therein.

The upper end of the front strut 21 is inserted and fixed within the first receiving space 34. Preferably, the upper end of the front strut 21 is connected with the articulated joint 3 by a connecting element, for instance a pin, screw, rivet or the like. The lower end of the push bars 11 each is pivotally connected and received within the second receiving space 35 by a pivoting element, such as a pin, a rivet or the like inserted in the pivot point thereof.

The latch member 51 is slidably received and has two ends extended through the first long slot 111 of the push bars 11. The ends of the latch member 51 can be retained in the locking portion 32 of the articulated joint 3 under the biasing of the resilient member 52.

It would also be appreciated that the safety lock 5 further includes a sliding member 55 for carrying the latch member 51. The sliding member 55 is slidably received in the push bars 11 and has a lower end fixedly connected with the latch member 51, and an upper end connected with the associating member is 54.

The resilient member 52 may be a spring, for instance a compression spring for biasing the latch member 51 to be retained in the locking portion 32, so as to lock the articulated joint 3 in a locked position.

The release actuator 53 slidably connected to the push bars 11 with a pin (not shown guided and retained by the second long slot 112 near the hooked handle portion 110.

The associating member is 54 may be a flexible wire or cable connected between the latch member 51 and the release actuator 53. When the release actuator 53 is pulled upwardly, the associating member 54 pulls the latch member 51 leaving the locking position 32 to unlock the articulated joint 3 thereby to allow the push bars 11 freely to rotate forwardly.

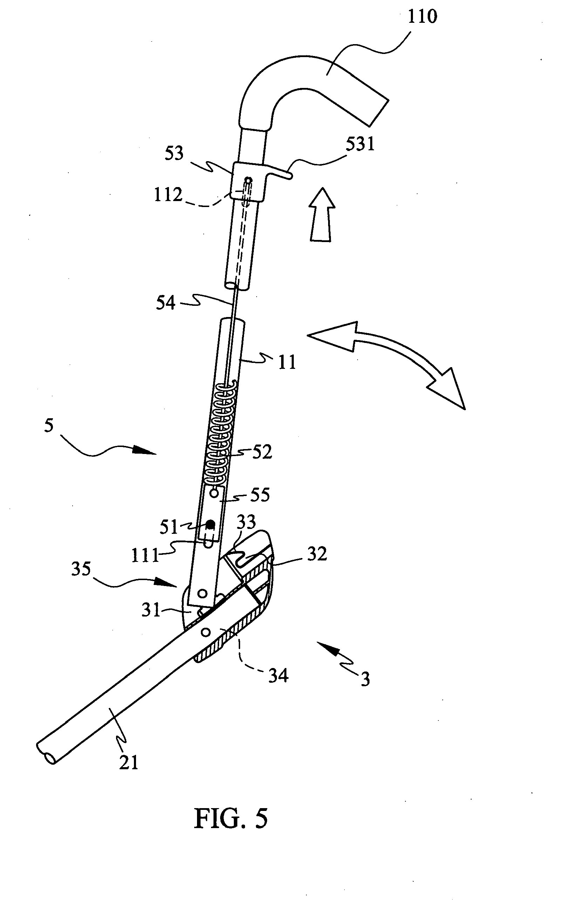

Referring to the FIG. 5, when latch member 51 is pulled against the biasing of the resilient element 52 by pulling the release actuator 53 to unlock the articulated joint 3, the push bar 11 is freely to rotate forwardly to achieve a full folding of the umbrella stroller frame 10.

However, when the umbrella stroller frame 10 is extending to an erected position, the push bar 11 rotates rearward and carries the latch member 51 slidably abutting the guiding ramp 33, thereby to guide the latch member 51 to enter the locking position 32 and lock the articulated joint 3, so as to lock the umbrella stroller frame 10 in a erected position for carrying baby passenger sitting thereon.

As the release actuator according to the present invention is mounted in a good position far from the spreader mechanism of the umbrella stroller, a lay-user shall have no fear and danger about the fingers which might be caught and clipped by the scissor-like frames of the spreader mechanism as ever happened in some traditional umbrella strollers.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

A safety lock mounted on an umbrella stroller comprises at least a release actuator movably mounted on a pair of push bars of an umbrella baby stroller, an articulated joint mounted with the umbrella baby stroller, a latch member for locking the articulated joint, an associating member for connecting between the release actuator and the latch member, and a resilient member for keeping the latch member biased in a locked position. The umbrella baby stroller may include an upper frame, a lower frame connected to the upper frame by the articulated joint, and a spread mechanism pivotally connected between the upper frame and the lower frame. When the spread mechanism is unlocked, the safety lock shall stop any further folding in longitudinal direction, and the user can complete the full folding in longitudinal direction if only if to pull the release actuator to unlock the safe lock.

## Claims

1. a safety lock for an umbrella baby stroller, the umbrella baby stroller comprises a upper frame, a lower frame and a spreading mechansm connected between the upper frame and the lower frame at the rear side thereof, and the safety lock comprising:
an articulated joint, pivotally connected between the upper frame and the lower frame, and having a locked position to stop the rotation of upper frame and an unlocked position to allow the upper frame freely to rotate;
a latch member, movably to latch the articulated joint in the locking position;
a resilient member, having one end biasing the latch member to keep the articulated joint in the locking position;
a release actuator, movably mounted on the upper frame for driving the latch member to unlock the articulated joint into the unlocked position; and
an associating member, connected between the release actuator and the latch member.

2. The safety lock for an umbrella baby stroller of claim 1, wherein the lower frame includes a pair of front struts, a pair of rear struts, and a lower scissor frame pivotally connected between the lower ends of the front struts and the rear struts.

3. The safety lock for an umbrella baby stroller of claim 1, wherein the lower frame further includes a seat support rod for supporting a seat.

4. The safety lock for an umbrella baby stroller of claim 1, wherein the spreading mechanism has a scissor frame and a spreader lock, the scissor frame having a pair of upper ends connected with the upper frame and a pair of lower ends pivoted with the lower frame, the spreader lock having a locked position for keeping the scissor frame extending in lateral direction.

5. The safety lock for an umbrella baby stroller of claim 1, wherein the resilient member is a compression spring having one end biasing the latch member.

6. The safety lock for an umbrella baby stroller of claim 1, wherein the release actuator has a hooked portion for user to grab and pull upwardly to unlock the articulated joint.

7. The safety lock for an umbrella baby stroller of claim 1, wherein the upper frame includes a pair of push bars each has a lower end pivotally connected to the articulated joint.

8. The safety lock for an umbrella baby stroller of claim 7, wherein the rear struts each has an upper end pivotally connected to the push bars, for following the rotation of the push bars to close to the front struts 21.

9. The safety lock for an umbrella baby stroller of claim 7, wherein the safety lock further comprises a slider slidably received in the lower end of the push bar, the slider having an upper end connected with the associated member and a lower end connected with the latch member.

10. The safety lock for an umbrella baby stroller of claim 7, wherein the push bars each has a hooked handle portion connected at the upper end thereof for gripping by user's hand, and a tube portion formed with a first long slot at the lower end and a second long slot formed near the hooked handle portion.

11. The safety lock for an umbrella baby stroller of claim 10, wherein the latch member is slidably received in the lower end of the push bar and has two ends extended through the first long slot to lock the articulated joint in the locked position.

12. The safety lock for an umbrella baby stroller of claim 7, wherein the articulated joint has a pair of side walls formed with a first receiving space and a second receiving space; in the second receiving space, each side walls is formed with a pivot point for connecting with the push bars, a locking position for retaining the latch member to stop the rotation of the push bars and a guiding ramp for guiding a latch member to enter the locking position.

13. The safety lock for an umbrella baby stroller of claim 12, wherein the locking position is an indent formed inside of the second receiving space.

14. The safety lock for an umbrella baby stroller of claim 12, wherein the locking position is a groove formed inside of the second receiving space.
